# EUROPEAN PATENT APPLICATION

(11) **EP 4 585 896 A1**
(43) Date of publication of application: **16.07.2025**
(21) Application number: 24151793.7
(22) Date of filing: 15.01.2024
(51) Int. Cl.: G01M 17/007, B60H 1/00, G01M 99/00, G06F 30/15

(54) **SYSTEM FOR TESTING THERMAL COMPONENTS OF A VEHICLE**

(71) Applicant: TI Automotive Technology Center GmbH, 76437 Rastatt (DE)
(72) Inventor: Brixner, Sebastian, 76437 Rastatt (DE)
(74) Representative: dompatent von Kreisler Selting Werner - Partnerschaft von Patent- und Rechtsanwälten mbB

(57) **Abstract**

The invention relates to a System for analysing a thermal management system of a vehicle or its components in symbiosis of real hardware (test bench) measurements, simulation data and the visualization of both in a complete virtual vehicle of nearly real size, the system comprising: a plurality of thermal components (12a - 12c), at least one sensor (14a - 14c) for detecting the behaviour of at least one thermal component, the at least one sensor (14a - 14d) being connected to a simulation system(16), which simulates the behaviour of other components (18a - 18c) of the vehicle, in particular of the entire vehicle, the simulation system (16) being adapted so that at least one simulated component (18c) of the vehicle can be replaced by another simulated component (18d), whereby the simulation system (16) is further adapted to control the thermal components (12a - 12c) based on the behaviour of the new simulated component (18d).

## Description

The invention relates to a system for testing thermal components of a vehicle.

Current vehicles, in particular electric vehicles, comprise many components, which need to be cooled. The thermal behaviour of these components is crucial when it comes to the function and performance of the vehicle. Operating these components outside of a desired temperature range, e.g. when overheating occurs, may cause severe damages or at least significantly affect the performance of the vehicle.

Therefore, modern vehicles, in particular electric vehicles, comprise a very complex cooling system including thermal components, such as a cooling circuit including a cooling liquid, a plurality of valves, control devices, heat exchangers etc.. This cooling system makes sure that components of the vehicle, such as for example the battery, are operated in the desired temperature range.

In order to make sure that all components of the vehicle can be operated in an optimal way, the cooling system including its thermal components has to be adapted to the respective vehicle. For that purpose it is known to test such cooling systems, including their thermal components, so as to analyse if they meet the requirements with respect to cooling performance of the respective components of the vehicle.

Systems for simulating the behaviour of such thermal components or for testing thermal components are known from the following publications:
CN 112033702,
CN 109540544,
CN 213544023,
CN 106155038,
US 10008031,
US 861,2192,
US 10671514,
US 11107308

It is an object of the present invention to provide a system for testing thermal components of a vehicle, which is able to simulate the behaviour of a plurality of different vehicles.

This object is achieved by the features of claim 1.

The inventive system for testing thermal components of a vehicle comprises a plurality of thermal components and at least one sensor for detecting the behaviour of at least one thermal component. Preferably the system comprises a plurality of sensors, which detect the behaviour of a plurality of thermal components, such as for example components of a cooling system of an electric vehicle.

The at least one sensor is connected to a simulation device, which simulates the behaviour of other components of the vehicle, in particular of the entire vehicle. The simulation device is adapted so that at least one simulated component of the vehicle can be replaced by another simulated component. Therefore, the behaviour of the thermal components to be tested, can be tested in a very convenient manner in connection with different components of a vehicle or different vehicles. The simulated components of the vehicle or the entire simulated vehicle can be changed in a very convenient way by the simulation device. Therefore, the thermal components can be very easily tested for a plurality of different vehicles or components.

The simulation system is further adapted to control thermal components based on the behaviour of the new simulated component. Therefore, replacing one simulated component by another simulated component will directly affect the thermal components to be tested, which are controlled accordingly. Thereby it is very easy to analyse the behaviour of the thermal component to be tested in relation with the new simulated component (or with a plurality of other simulated components, which can be easily exchanged).

Preferably the simulation system is adapted to simulate a virtual driving situation of the vehicle under different environment conditions, in particular under different temperature and/or air pressure conditions and to adapt the behaviour of the simulated components accordingly. Hereby the thermal components are controlled based on the behaviour of these simulated components under different environment conditions.

In all embodiments of the present invention the simulation system may also serve as a controlling system, which controls the thermal components based on the behaviour of the simulated components. Hereby, the sensor values detected by the at least one sensor for detecting the behaviour of the at least one thermal component can be transmitted to the controlling system, so that the controlling of the thermal components and/or the simulation of the other components of the vehicle can be adapted based on the detected sensor values.

Preferably the system comprises a display device for presenting a virtual representation of the thermal components together with parameters detected by the sensors of the thermal components and further for displaying the simulated components and parameters related to their behaviour. Hereby, the function and performance of the thermal components to be tested can be displayed in a very convenient manner so that many different persons (including persons without a technical background in this field) will be able to understand the function and performance of these thermal components.

It is further preferred that the system is adapted to display an endless real time driving scenario of the display until a presenter switches to a next scene by using a control interface.

The control interface can be for example a tablet computer wirelessly connected to the system. Hereby the viewers can understand the behaviour of the thermal components to be tested in a real time driving scenario.

It is further preferred that a displayed thermal component can be selected and the control interface is adapted to generate a command for turning, displaying an exploded view and/or animating the selected thermal component. Hereby the function of the thermal component can be displayed in an even more effective manner.

It is further preferred that the simulation device is adapted to simulate a heating up scenario of a vehicle, an economical cooling scenario of a vehicle and/or an extreme cooling scenario of a vehicle. During these scenarios the thermal component can be tested in order to analyse how the thermal component will behave during the respective scenario.

It is preferred that the vehicle is an electric vehicle.

The thermal component can comprise a pump, a valve and/or a heat exchanger.

It is further preferred that the display device is adapted to interactively display the function and performance of the thermal component whereby the content is controllable in real time by a presenter using the control device.

Further it is preferred that the control device is adapted to control the light in a presenting room in which the display device is located.

It is further preferred that the simulation device is adapted to simulate the behaviour of a selectable type of an electric vehicle, in particular its electric motor, its battery and/or its cabin.

The invention is further related to a method for testing thermal components of a vehicle, whereby the method comprises the following method steps:
Detecting the behaviour of at least one thermal component (12a-12c) by at least one sensor (14a - 14c)
the at least one sensor (14a - 14d) being connected to a simulation system (16), which simulates the behaviour of other components (18a - 18c) of the vehicle, in particular of the entire vehicle,

Replacing by the simulation system (16) at least one simulated component (18c) of the vehicle by another simulated component (18d),

Controlling the thermal components (12a - 12c) based on the behaviour of the new simulated component (18d).

The inventive method can comprise all features of the inventive system and vice versa.

In a preferred embodiment the method comprises the following additional method steps:
selecting by a user a target vehicle
configuring components of the vehicle, in particular the power train and the battery,
selecting the desired features of the thermal system,

Automatically loading 3D data into a visualization environment,
whereby the simulation system selects the necessary components to fulfill the selected features of the thermal management system,
placing by the user these components in real time freely inside the packaging space of the selected vehicle

It is preferred that the simulated components are displayed on a large display so that the user may see all details of the selected data in an appropriate size, in particular in real size. The positioning process can be supported by an AI method implemented in the simulation system.

It is further preferred that after the main components of the vehicle and the thermal system are positioned as desired the fluid lines within the existing open space between the components the result is displayed in real time.

Again this process can be supported by an AI method in the simulation system. The displayed results can be investigated by the user in an interactive manner, meaning that the user may for example rotate, zoom and/or select certain components.

In a further preferred embodiment the inventive method comprises the further additional steps:
automatically analyzing the system performance, efficiency, weight, and/or cost based on at least one of length, diameter, number, angle, bends of thermal fluid lines, number of connectors, type, size of the main system components

E.g. system costs can be loaded from a product data base.

The performance, efficiency, hydraulic loses and/or other physical values can be calculated by a detailed multi-physics simulation.

The analysis results can be preferably displayed as text, images, animations and/or can be applied to the real time driving scenarios described above.

The analysis results can be displayed in real time. As an alternative some analysis results can be pre-processed and then displayed in a more attractive manner than real time (e.g. in a full driving cycle).

At the following preferred embodiments of the invention are described in relation with the figures:
Figure 1 shows a schematic representation of the inventive system.
Figure 2a and 2b show a possible representation of a thermal component on the display device.
Figure 3 shows a thermal component together with other components of the vehicle.
Figures 4 - 6 show different representations of thermal components of a vehicle.

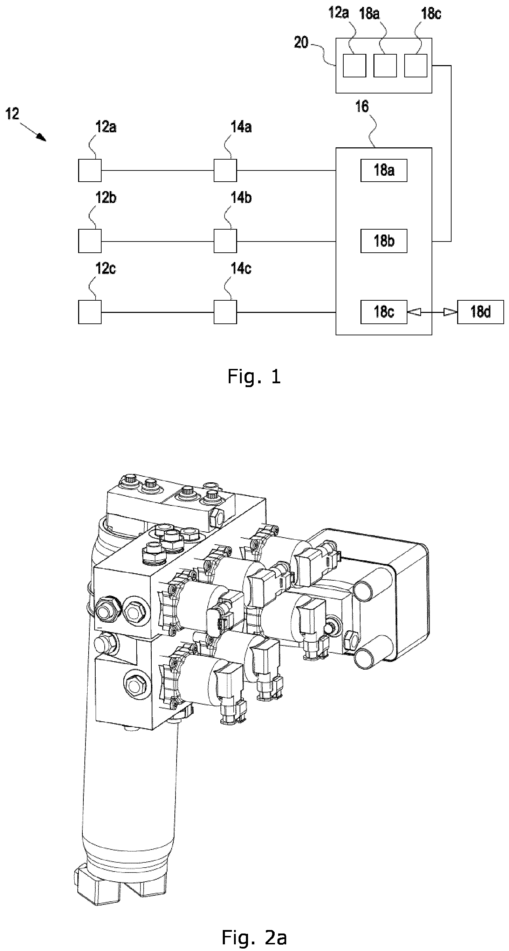

A system 10 for testing thermal components 12a - 12c of a vehicle is shown in figure 1. Hereby each component is connected to at least one sensor 14a - 14c, which detects the behaviour of the respective thermal component 12a - 12c. The thermal components 12a - 12c can be for example a pump, a valve and/or a heat exchanger.

The sensors can detect system pressures, temperatures, pump and compressor speed, electrical power consumption of components (valves, pumps, heater, etc.), position of valves, mass flow rate, transferred heat, etc.

The sensors 14a - 14c are connected to a simulation system 16, which simulates the behaviour of other components 18a - 18c of the vehicle. In particular the entire vehicle can be simulated. At least one simulated component 18c of the vehicle can be replaced by another simulated component 18d.

The simulation system 16 is further adapted to control the thermal components 12a - 12c based on the behaviour of the new simulated component 18d.

Figure 2a shows a thermal component (namely an integrated thermal module refrigerant, ITMR), which can be displayed by the present invention on a large display.

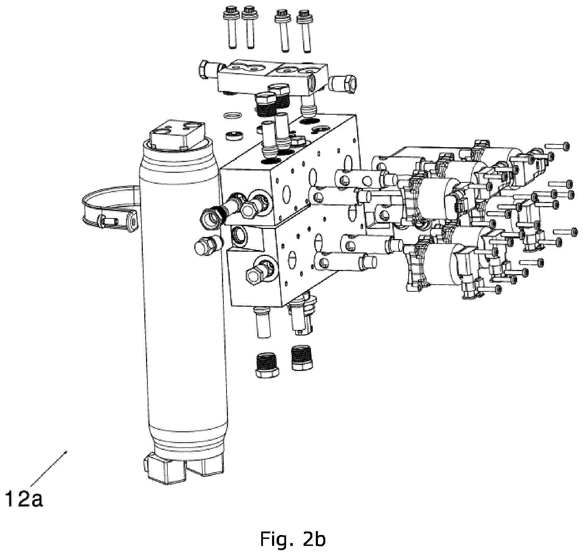

Figure 2b shows an exploded view of the same thermal component in a disassembled state.

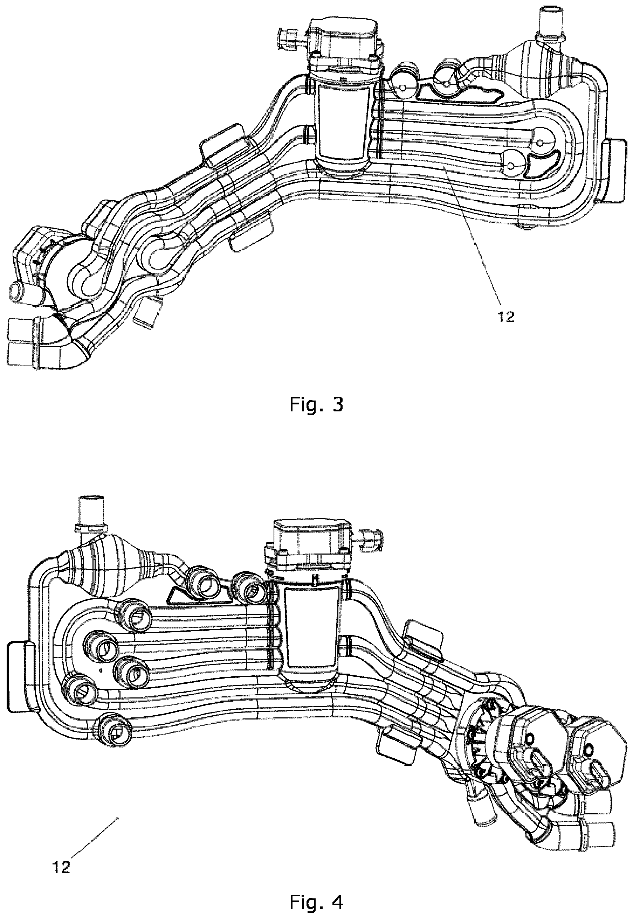

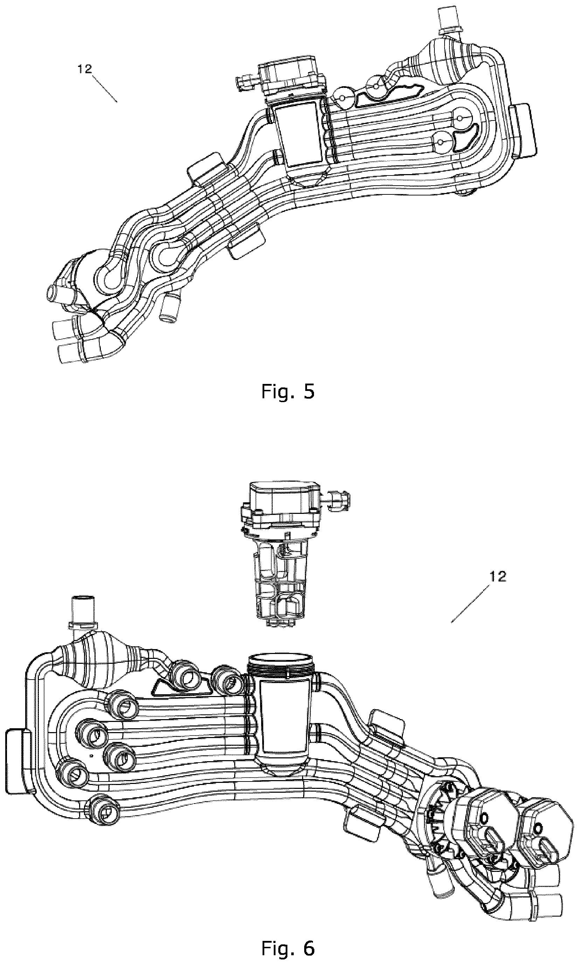

Figures 4 - 6 show different views of another thermal component (integrated thermal manifold, ITMA) 12 whereby figure 5 shows a rotated view of the ITMA and figure 6 shows the ITMA in a disassembled state.

The present invention therefore provides a system and method for analysing the performance of thermal components, whereby sensor data of the real system are supplemented with simulation data of components which do not exist in reality as hardware. Hereby the virtual engineering can visualize the performance and data of the entire vehicle. At the same time the system receives data from the simulated virtual vehicle, hereby coupling hardware simulation and visualization in real time.

## Claims

1. System for testing thermal components of a vehicle, the system comprising:
a plurality of thermal components (12a - 12c),
at least one sensor (14a - 14c) for detecting the behaviour of at least one thermal component,
the at least one sensor (14a - 14d) being connected to a simulation system (16), which simulates the behaviour of other components (18a - 18c) of the vehicle, in particular of the entire vehicle,
the simulation system (16) being adapted so that at least one simulated component (18c) of the vehicle can be replaced by another simulated component (18d),
whereby the simulation system (16) is further adapted to control the thermal components (12a - 12c) based on the behaviour of the new simulated component (18d).

2. System for testing thermal components of a vehicle according to claim 1, **characterized in that** the simulation system (16) is adapted to simulate a virtual driving situation of the vehicle under different environment conditions, in particular under different temperature and/or air pressure conditions, and to adapt the behaviour of the simulated components (18a -18d) accordingly,
whereby the thermal components (12c - 12d) are controlled based on the behaviour of these simulated components (18a - 18d) under different environment conditions.

3. System for testing thermal components of a vehicle according to claim 1 or 2, whereby the system (10) comprises a display device (20) for presenting a virtual representation of the thermal components (12a - 12d) together with parameters detected by the sensors (14a - 14c) of the thermal components (12a - 12d), and further for displaying the simulated components (18a - 18d) and parameters related to their behaviour.

4. System according to claim 3, **characterized in that**, the system (10) is adapted to display an endless real time driving scenario on the display (20) until a presenter switches to a next scene by using a control interface.

5. System according to claim 4, **characterized in that**, the control interface is a tablet computer wirelessly connected to the system.

6. System according to claims 3 - 5, **characterized in that**, a displayed thermal component (12a) can be selected and the control interface is adapted to generate a command for turning, displaying an exploded view and/or animating the selected thermal component.

7. System according to claims 1-6, **characterized in that**, the simulation device is adapted to simulate a heating up scenario of a vehicle, an economical cooling scenario of a vehicle and/or an extreme cooling scenario of a vehicle.

8. System according to claims 1-7, **characterized in that**, the vehicle is an electric vehicle.

9. System according to claims 1 -8, **characterized in that**, the thermal component (12a - 12c) comprises a pump, a valve and/or a heat exchanger.

10. System according to claims 1-9, **characterized in that**, the display device (20) is adapted to interactively display the function and performance of the thermal component (12a - 12c), whereby the content is controllable in real time by a presenter using the control device.

11. System according to claims 1 - 10, **characterized in that**, the control device is adapted to control the light in a presenting room, in which the display device (20) is located.

12. System according to claims 1 - 11, **characterized in that**, the simulation device (16) is adapted to simulate the behaviour of a selectable type of electric vehicle, in particular its electric motor, its batterie and/or its cabin.

13. Method for testing thermal components of a vehicle, the method comprising:
Detecting the behaviour of at least one thermal component (12a-12c) by at least one sensor (14a - 14c)
the at least one sensor (14a - 14d) being connected to a simulation system (16), which simulates the behaviour of other components (18a - 18c) of the vehicle, in particular of the entire vehicle,
Replacing by the simulation system (16) at least one simulated component (18c) of the vehicle by another simulated component (18d), Controlling the thermal components (12a - 12c) based on the behaviour of the new simulated component (18d).

14. Method according to claim 13, the method comprising the additional steps:
selecting by a user a target vehicle
configuring components of the vehicle, in particular the power train and the battery,
selecting the desired features of the thermal system,
Automatically loading 3D data into a visualization environment,
Whereby the simulation system selects the necessary components To fulfill the selected features of the thermal management system,
placing by the user these components in real time freely inside the packaging space of the selected vehicle

15. Method according to claim 14 , whereby after the main components of the vehicle and the thermal system are positioned as desired the fluid lines within the existing open space between the components the result is displayed in real time.

16. Method according to claim 15 **characterized by** automatically analyzing the system performance, efficiency, weight, and/or cost based on at least one of length, diameter, number, angle, bends of thermal fluid lines, number of connectors, type, size of the main system components.
